# EUROPEAN PATENT SPECIFICATION

(11) **EP 3 651 267 B1**
(45) Date of publication and mention of the grant of the patent: **13.09.2023**
(21) Application number: 18204575.7
(22) Date of filing: 06.11.2018
(51) Int. Cl.: H01Q 1/04, H01Q 1/22, H01Q 1/20, G01D 21/00, E02D 29/14, H01Q 1/52

(54) **COVER ELEMENT WITH TRANSMITTER SYSTEM**
ABDECKELEMENT MIT SENDERSYSTEM
ÉLÉMENT DE COUVERTURE COMPORTANT UN SYSTÈME ÉMETTEUR

(43) Date of publication of application: 13.05.2020
(73) Proprietor: REMONDIS Aqua Industrie GmbH & Co. KG, 44536 Lünen (DE)
(72) Inventor: BEHRENS, Ralf, 24109 Kiel (DE); LÜRING, Carsten, 24105 Kiel (DE); LEYBOLD, Axel, 24107 Kiel (DE)
(74) Representative: Peters, Hajo

(56) References cited:
- WO-A1-2015/175724
- KR-B1- 101 828 054
- US-A1- 2001 011 009
- US-B1- 8 077 101
- US-B2- 9 105 181

## Description

### 1. Summary:

The invention relates to a remote sensing system comprising an internal antenna unit securable to the lower surface of a cover element, especially a manhole cover, an external antenna unit for transmitting a signal to a communication device outside of the upper surface of the cover element, especially the manhole cover, and coupling means electrically coupling the internal antenna unit to the external antenna unit. The invention also relates to a cover element, especially a manhole cover, with an aperture comprising an internal antenna unit secured to the lower surface and an external antenna unit placed within/inside the aperture and coupling means electrically coupling the internal antenna unit to the external antenna unit. The invention further also relates to a transmitter system comprising a cover element, especially a manhole cover, with an aperture, an internal antenna unit secured to the lower surface of the manhole cover body, an external antenna unit placed within/inside the aperture, coupling means electrically coupling the internal antenna unit to the external antenna unit, and finally a transmitter unit configured to transmit radio signals to the internal antenna unit.

### 2. Background:

Cover elements, especially manhole cover are usually made of massive cast iron, sometimes even being reinforced on the surface by a layer of concrete. In addition, manhole covers are electrically well-grounded, Accordingly, any attempt at sending a signal (radio signal) or date from inside a shaft or manhole through a manhole cover to the outside (e.g. to gateways and on to the internet) faces massive difficulties and calls for specific solutions and constructions.

The following documents have been identified as touching the area of the problem described above.

DE102005062732A1 of Deutsche Telekom (DE) discloses a cover element for a shaft with an antenna for a radio network being fixed to the lower surface and sending a signal upwards.

DE202007006970U1 of Selfsan Consult GmbH (DE) refers to a cover element with a monitoring unit being bound to the frame.

EP 1 894 174 of Hadronex, LLC (US) discloses a cover element for a shaft in which at least one hole is drilled into the cover element through which a connector cable connects from within to an external antenna.

DE20209228U1 (as well as DE10227896A1) of Ms. Susanne Weritz (DE) discloses a cover element that comprises a transponder unit which stores data that may be read with a specific reader.

WO 2015/175724 A1, US 8 077 101 B1, US 2001/011009 A1, US 9 105 181 B2 and KR 101 828 054 B1 disclose other remote sensing systems integrated in lids of meter devices or manhole covers.

The inventors have found a solution to the above-described problem as further defined below.

### 3. Summary of the invention:

The invention relates in an **ASPECT A** to a remote sensing system according to claim 1.

An example not covered by the claims further relates in an **ASPECT B** to a cover element, especially a manhole cover, comprising:
a manhole cover body comprising a lower surface, an upper surface and an aperture extending from the lower surface to the upper surface;
an internal antenna unit secured to the lower surface of the manhole cover body;
an external antenna unit placed within/inside the aperture; and
coupling means electrically coupling the internal antenna unit to the external antenna unit. Preferably, the coupling means transmit radio signals received by the internal antenna unit to the external antenna unit.

Another example not covered by the claims relates in an **ASPECT C** to a transmitter system comprising:
a cover element, especially a manhole cover, comprising:
   a manhole cover body comprising a lower surface, an upper surface and an aperture extending from the lower surface to the upper surface;
   an internal antenna unit secured to the lower surface of the manhole cover body;
   an external antenna unit placed within/inside the aperture; and
   coupling means electrically coupling the internal antenna unit to the external antenna unit; and
a transmitter unit configured to transmit radio signals to the internal antenna unit. The transmitter unit is placed within the manhole and/or the transmitter unit comprises a sensor or is coupled to a sensor unit. In a further preferred embodiment the coupling means transmit radio signals received by the internal antenna unit to the external antenna unit.

The above-mentioned **ASPECT A** with the arrangements including the aperture extending from the lower surface to the upper surface of the cover element (manhole cover), with the external antenna unit placed within/inside the aperture provides a highly advantageous solution to the above-mentioned problem with an effective protection of the external antenna combined with a signal transmission.

### 4. Description of the figures

**Figure 1****)** schematically shows a cross section of a manhole (1) showing a manhole cover (2) with an internal antenna unit (3), an external antenna unit (4) being coupled via coupling means (5) (here a connector cable). It is an example of an embodiments of of the invention making use of passive transmission, using e.g, LoRaWAN.
**Figure 2****)** schematically shows a cross section of a manhole (1), showing a manhole cover (2) with an internal antenna unit (3), an external antenna unit (4) being coupled via coupling means (5) (here two connector cables with a battery-driven repeater unit (13)). It is an example of an embodiment of the invention using active transmission using e.g,. LoRaWAN with a battery driven repeater unit.
**Figure 3****)** schematically shows - in a plan view at an angle from above - a manhole cover (2). It is an example of an embodiment of the invention.
**Figure 4****)** schematically shows - in a plan view at an angle from below - a manhole cover (2). It is an example of an embodiment of the invention.
**Figure 5****)** shows a cross section view of a manhole cover (2) according to a preferred embodiment of the invention focusing on flexibly fixing by a holding body (15) the external antenna unit (4) in relation to the upper surface (7) of the manhole cover (2) if e.g. a car's tire (X) would pass over it.
**Figure 6****)** shows - in detail of **Figure 5****)** - as a preferred embodiment of the invention the holding body (15) flexibly fixing the external antenna unit (4) to the manhole cover (2).

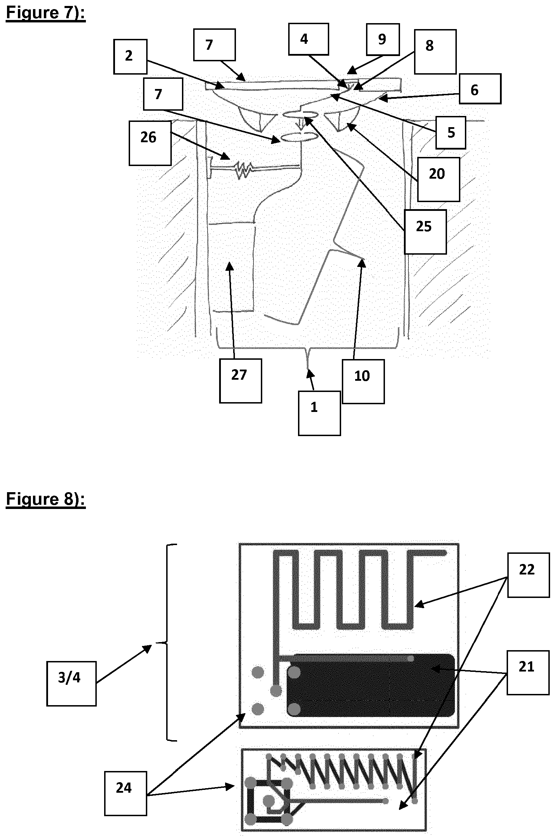

**Figure 7****)** schematically shows a cross section of a manhole (1), showing a manhole cover (2) with an internal antenna unit (3), an external antenna unit (4) being coupled via coupling means (5). It is also showing the arrangement of two loop antennas, one being part of the internal antenna unit (3) on the lower surface (6) of the manhole cover (2) and the other being the antenna (25) of the transmitter unit (10) from within the manhole (1) which are brought in close communication. It is an example of an embodiment of the invention making use of passive transmission being also usable for the transfer of mobile communications data.
**Figure 8****)** schematically shows a plan view on an antenna used in the invention.

### 5. Detailed Description of the invention:

### 5.1 Details of the first ASPECT A:

In an **EMBODIMENT A1** the present invention relates to a remote sensing system according to claim 1.

The **ASPECT A** with the arrangements including the aperture extending from the lower surface to the upper surface of the cover element (manhole cover) and with the external antenna unit placed within/inside the aperture provides a highly advantageous solution to the above-mentioned problem with an effective protection of the external antenna combined with a signal transmission.

The remote sensing system of **ASPECT A** is especially suitable for the use of LoRaWAN (Long Range Wide Area Network) systems.

It has to be noted that **ASPECT A** does not have a fixed connector (e.g. cable) connecting the cover element with any part connected to the walls of the shaft or manhole. This has the advantage that otherwise this would easily result in damage to the connector if the cover element is moved or removed from the shaft.

Further, in **ASPECT A** coupling means (5) do not reach into or are found within the aperture.

Within the meaning of the invention, the term "external antenna unit" refers to a unit including an antenna able to transmit a signal received from beyond the lower surface of the cover element to the external antenna unit.

Within the meaning of the invention, the term "internal antenna unit" refers to a unit including an antenna able to receive a signal transmit the external antenna unit (e.g. via coupling means) for transmitting a signal to a communication device outside of the upper surface of the cover element.

Both antenna units but especially the external antenna unit must be built to withstand harsh usage conditions. These include resistance to wear (as seen if constantly in contact with traffic (tires, boots etc.) the use of salt, sand and grains in winter as well as vandalism. These antennas, especially the "external antenna unit" thus most often has a "top" which is preferably formed of wear resistant polymers like Polyethylenterephthalat or Polyethylen (as PE-HD. As these shafts are often connected to the communal water supply care has to be taken in selecting these materials from a toxicological aspect.

Within the meaning of the invention, the term "shaft" refers to all kinds of perpendicular opening especially a drainage body including specifically a "manhole".

Within the meaning of the invention, the term "manhole" shall be taken in its broadest sense to include, without limitation, underground vaults, for example manholes or utility vaults, as well as any other enclosed area, underground or above ground, that has instrumentation or materials or aspects in or about the enclosed area that may be monitored.

Within the meaning of the invention, the term "cover element" refers to all elements for covering the horizontal surface of any kind of shaft or any other drainage body. It specifically also encompasses any frame element (usually found at the upper end of the shaft (or manhole)) used to position the cover element (horizontally) over the shaft. "Cover element" as a preferred element encompasses also a "manhole cover".

Within the meaning of the invention, the term "manhole cover" shall be taken in its broadest sense to include, without limitation, covers for underground vaults, for example manholes or utility vaults, as well as enclosure barriers such as doors or walls for any other enclosed area, underground or above ground, that has instrumentation or materials or aspects in or about the enclosed area that may be monitored. In most cases, a manhole cover is made of cast iron, sometimes being reinforced on the surface by a layer of concrete, although also polymers are used either fully or partly in combination with cast iron.

Within the meaning of the invention, the term "coupling means" refers all elements that could electrically couple the internal antenna unit to the external antenna unit, including one or more connector cables and could include further elements like a "repeater unit".

Within the meaning of the invention, the term "upper surface of the cover element" refers to the surface of a cover element (or of a manhole cover) that would face up and face the outside of a shaft (or a manhole) if the cover element is used to horizontally close the shaft or manhole. The "upper surface" would include also the upper surface of a manhole cover body (usually made of cast iron) or the upper surface of a concrete layer of top of a "manhole cover body" but could also include fully or partly polymer material.

Within the meaning of the invention, the term "lower surface of the cover element" refers to the surface of a cover element (or of a manhole cover) that would face down and face the inside of a shaft (or a manhole) if the cover element is used to horizontally close the shaft or manhole. The "lower surface" would include also the lower surface of a manhole cover body (usually made of cast iron but could also include fully or partly polymer material) or one or more "ridges" fixed (or annealed" to the lower surface of the "cover element". Thus, one or more "ridges" fixed (or annealed" to the lower surface of the "cover element" becomes part of the "lower surface of the cover element".

Within the meaning of the invention, the term "transmitting a signal to a communication device outside of the upper surface" means that the signal is transmitted in a direction to the upside of the upper surface of the cover element and thus, outside the shaft or manhole. The communication device could be any device able to receive a signal including one or more gateways and on (through these) to a communication network (e.g. the internet).

Within the meaning of the invention, the term "aperture" means any opening that perforates the cover element or manhole cover from the upper to the lower surface of the cover element or manhole cover (2). The aperture may take any form but must be able to accommodate the external antenna unit.

In a preferred **EMBODIMENT A2** of the remote sensing system of **EMBODIMENT A1,** the cover element is a manhole cover (2)

In a preferred **EMBODIMENT A3** of the remote sensing system of any one of **EMBODIMENTS A1 or A2,** the coupling means (5) is a connector cable connecting the internal antenna unit (3) directly to the external antenna unit (4).

In a preferred **EMBODIMENT A4** of the remote sensing system of any one of **EMBODIMENTS A1 to A3,** the coupling means (5) comprise a repeater unit (13).

In a preferred **EMBODIMENT A5** of the remote sensing system of **EMBODIMENTS A1 to A4,** the external antenna unit (4) is configured to cancel the electromagnetic interference (EMI) of the cover element or manhole cover (2).

Within the meaning of the invention, the term "electromagnetic interference (EMI)" refers to the EMI seen in the environment the invention is used in, the cover elements or manholes. As said above, manhole cover are usually made of massive cast iron, sometimes even being reinforced on the surface by a layer of concrete and sometimes also specific polymers. In addition, manhole covers are electrically well-grounded. Accordingly, an antenna used inside a manhole cover faces a strong EMI effect, making it preferably to specifically adapt the antenna. If successful, it also results in the antenna fulfilling criteria of electromagnetic compatibility (EMC).

The antenna should preferably be adapted to the surrounding material, especially regarding the length of the antenna. Potentially influencing factors besides the attributes of the surrounding material (including their connectivity), are the electrical grounding, the mass, the position relative to the manhole and the positioning of the circuit paths on the circuit board as well as the material of the circuit board.

Examples of preferred antenna include antenna with one or more of the following attributes:
- based on a circuit board,
- are a resonant narrow band antenna,
- show a sinusoidal path of the current in the antenna,
- have a length of the antenna of a multitude of ¼ λ (wavelength)
- has a base impedance and transmitter impedance of 50 Ω, and/or
- a directional radio pattern being an upwards pointing kidney characteristic.

Preferably, an antenna - used in this invention - shows 2 of the above attributes, 3 of the above attributes or 4 of the above attributes, and most preferably all of the above attributes.

In a preferred embodiment the circuit board - used in this invention - has a breadth of 10 mm to 100 mm, preferably of 20 mm to 50 mm, and a length of 10 mm to 100 mm, preferably of 20 mm to 50 mm, most preferably a breadth and a length of 20 mm to 50 mm.

Preferably, the antenna, especially if build on a circuit board uses material, e.g. polymeric material protecting the antenna against corrosion.

In a preferred **EMBODIMENT A6** of the remote sensing system of any one of **EMBODIMENTS A1 to A4,** the internal antenna unit (3) is configured to cancel the electromagnetic interference (EMI) of the cover element or manhole cover (2).

In a preferred **EMBODIMENT A7** of the remote sensing system of any one of **EMBODIMENTS A1 to A4,** the internal antenna unit (3) and the external antenna unit (4) are configured to cancel the electromagnetic interference (EMI) of the cover element or manhole cover (2).

In a preferred **EMBODIMENT A8** of the remote sensing system of any one of **EMBODIMENTS A1 to A7,** the external antenna unit (4) is formed on a circuit board (21) preferably the antenna has a base impedance and transmitter impedance of 50 Ω, and/or is a resonant narrow band antenna and/or has a length of a multitude of ¼ λ (wavelength).

In a preferred embodiment of **EMBODIMENT A8** the external antenna unit (4) is configured to cancel the electromagnetic interference (EMI) of the cover element, especially the manhole cover (2), formed on a circuit board (21), the antenna having a base impedance and transmitter impedance of 50 Ω, and is a resonant narrow band antenna and has a length of a multitude of ¼ λ (wavelength).

In a preferred **EMBODIMENT A9** of the remote sensing system of any one of **EMBODIMENTS A1 to A7,** the internal antenna unit (3) is formed on a circuit board (21) preferably the antenna has a base impedance and transmitter impedance of 50 Ω, and/or is a resonant narrow band antenna and/or has a length of a multitude of ¼ λ (wavelength).

In a preferred **EMBODIMENT A10** of the remote sensing system of any one of **EMBODIMENTS A1 to A7,** the internal antenna unit (3) and the external antenna unit (4) are formed on a circuit board (21) preferably the antennas have a base impedance and transmitter impedance of 50 Ω, and/or are resonant narrow band antenna and/or have a length of a multitude of ¼ λ (wavelength).

In the embodiments of the invention the external antenna unit (4) is not attached to the walls of the aperture (8), and gap (14) is provided between the external antenna unit (4) and the wall of the aperture (8).

The external antenna unit (4) is flexibly attached to the lower surface (6) of the cover element, of the manhole cover (2) or to a ridge being fixed to them forming part of said lower surface (6).

There is further a holding body (15) having a first arm (16) extending into a first direction and a second arm (17) extending in a second direction essentially perpendicular to the first direction, wherein the first arm (16) is flexibly attached to the lower surface (6) of the cover element or the manhole cover (2), and the second arm (17) comprises the external antenna unit (4) and extending into the aperture (8).

The second arm (17) is not attached to the walls of the aperture (8), and a gap (14) is provided between the second arm (17) and the wall of the aperture (8).

In a preferred embodiment, one or more ridges (20) are fixed to the cover element, to the manhole cover (2). By being fixed to the cover element, or to the manhole cover (2), the one or more ridges (20) become part of the lower surface (6) of the cover element, especially the manhole cover (2). In this **EMBODIMENT** the one or more ridges (20) protrude beyond the internal antenna unit (3, 4), the coupling means (5) and the optional repeater unit (13) and/or any optional electrical source (18).

In a preferred embodiments, the antenna units (3, 4), the coupling means (5) and the optional repeater unit (13) are powered by an electrical source (18). This embodiment is the example of active transmission. One option the source to be selected is a battery.

Within the meaning of the invention, the term "electrical source " refers to any source of electrical energy including batteries batteries/accumulators, local power supply voltage local power supply voltage or also electricity supplied by so called "energy harvesting" structures (e.g. solar power).

In principle, the system according to **ASPECT A** could be used - depending on the requirements on the distance of the emitted radio signals - in two variants, the active (powered by an electrical source) or the passive (not powered by an electrical source) transmission (of the signal through the cover element/manhole).

Passive transmission has the advantage that no energy source is needed. The disadvantage is the limited range achievable and that can - depending on obstacles being present close to the cover element - only be 400m to 1500m. Still, the passive transmission may be used alone or additionally even if an active repeater is used (e.g. if a gateway is in range). Passive transmission may also be used as a back-up-system if the active repeater fails.

In a preferred embodiment the antenna units (3,4), the coupling means (5) and/or the optional repeater unit (13) are powered by energy harvesting. Methods and devices for energy harvesting that could e.g. be integrated into the cover element/manhole cover (2) are:
- Generating electricity by elements using the thermoelectric effect (e.g. peltiere elements). These elements would use the difference in temperature between the inner part of the manhole or shaft and the environment. Examples of fitting uses would be areas of district heating.
- Generating electricity by solar panels Examples of fitting uses would be pedestrian zones.
- Generating electricity by piezo elements. The kinetic energy generated by stepping on or diving over a cover element or manhole cover is transformed into electric energy. The piezo element could be integrated into flexible polymeric elements of a frame element used to position the cover element or manhole cover over the shaft or manhole. The piezo element could also be integrated into the upper surface of the cover element or manhole cover by polymeric elements.

In a preferred embodiment the remote sensing system, the antenna units (3, 4), the coupling means (5) and the optional repeater unit (13) are not powered by any electrical source. This embodiment the example of passive transmission.

In a preferred embodiment, there is more than one of the internal antenna unit (3) and/or of the external antenna unit (4).

In a preferred embodiment, there are two internal antenna units (3) and one external antenna unit (4).

In a preferred embodiment, there is one internal antenna unit (3) and two external antenna units (4).

In a preferred embodiment, there are two internal antenna units (3) and two external antenna units (4).

In a preferred embodiment, one of the antenna units (3, 4) with its coupling means (5) are not powered by any electrical source, while one of the antenna units (3, 4) with its coupling means (5) and a repeater unit (13) is powered by an electrical source, like a battery.

### 5.2 Details of the second ASPECT B:

In an example related to part of the claimed subject-matter, the present invention relates to a cover element, especially a manhole cover (2), comprising:
a manhole cover body (2a) comprising a lower surface (6), an upper surface (7) and an aperture (8) extending from the lower surface (6) to the upper surface (7);
an internal antenna unit (3) secured to the lower surface (6) of the manhole cover body (2a);
an external antenna unit (4) placed within/inside the aperture (8); and
coupling means (5) electrically coupling the internal antenna unit (3) to the external antenna unit (4).

All definition, example of embodiments and explanations given above for **ASPECT A** also apply for **ASPECT B.**

Within the meaning of the invention, the term "manhole cover body" refers to a part of a manhole cover or a cover element which is the core element of a manhole cover. It is most often made from cast iron. In this context, the term "lower surface of the cover element" refers to the surface of a cover element (or of a manhole cover) and thus is also synonymous to "lower surface of a manhole cover body". In this context, the term "upper surface of the cover element" refers to the surface of a cover element (or of a manhole cover) and thus is also synonymous to "upper surface of a manhole cover body".

### 5.3 Details of the third ASPECT C:

An example concerning part of the claimed subject-matter relates to a transmitter system comprising:
a cover element, especially a manhole cover (2), comprising:
   a manhole cover body (2a) comprising a lower surface (6), an upper surface (7) and an aperture (8) extending from the lower surface (6) to the upper surface (7);
   an internal antenna unit (3) secured to the lower surface (6) of the manhole cover body (2a);
   an external antenna unit (4) placed within/inside the aperture (8); and
   coupling means (5) electrically coupling the internal antenna unit (3) to the external antenna unit (4); and
a transmitter unit (10) configured to transmit radio signals to the internal antenna unit.

All definition, example of embodiments and explanations given above for **ASPECT A** also apply for **ASPECT C.**

Within the meaning of the invention, the term "manhole cover body" refers to a part of a manhole cover or a cover element which is the core element of a manhole cover. It is most often made from cast iron. In this context, the term "lower surface of the cover element" refers to the surface of a cover element (or of a manhole cover) and thus is also synonymous to "lower surface of a manhole cover body". In this context, the term "upper surface of the cover element" refers to the surface of a cover element (or of a manhole cover) and thus is also synonymous to "upper surface of a manhole cover body".

### 5.4 Details on certain aspects of the invention as shown in the figures:

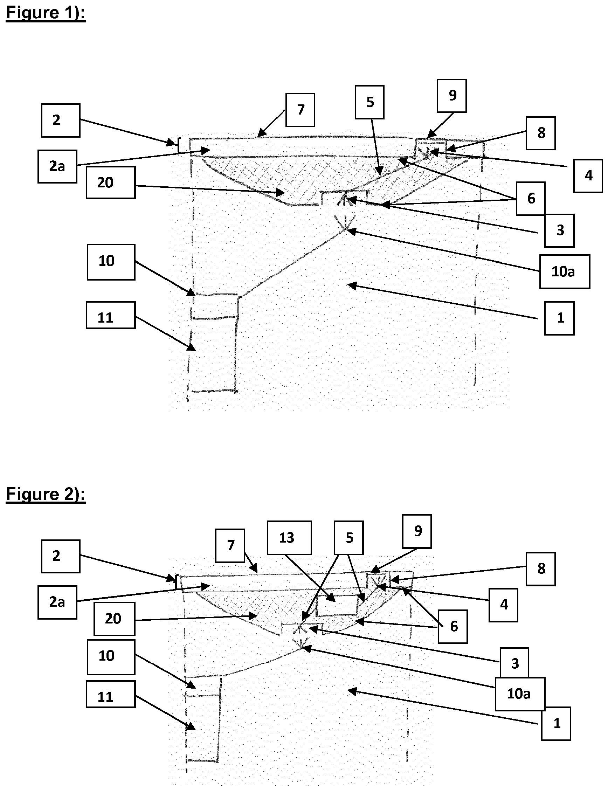

**Figure 1****)** is an example of embodiments of all **ASPECTS A, B** and **C** of the invention using passive transmission e.g. using LoRaWAN.

**Figure 1****)** schematically shows in a cross section view a manhole (1) with a manhole cover (2) (having a manhole cover body (2a)) with a lower surface (6), an upper surface (7) and an aperture (8) in the manhole cover. An internal antenna unit (3) and an external antenna unit (4) are coupled via coupling means (5) (here a connector cable). The Figure is thus showing an example of **ASPECT A** and - in connection with the manhole cover (2) - also of A**SPECT B.** The manhole also shows in its lower surface (6) more than one ridge (20) protecting the internal antenna unit (3) and the coupling means (5). The figure also shows a transmitter unit (10) (with a transmitter antenna (10a)) thus also being an Example of **ASPECT C.** As part of this transmitter unit there is also depicted a sensor (11) which might also take the form of a further LoRaWAN Unit.

**Figure 2****)** is an example of embodiments of all **ASPECTS A, B** and **C** of the invention using active transmission e.g. using LoRaWAN together with a battery-driven Repeater Unit.

**Figure 2****)** schematically shows in a cross section view a manhole (1) with a manhole cover (2) (having a manhole cover body (2a)) with a lower surface (6), an upper surface (7) and an aperture (8) in the manhole cover. An internal antenna unit (3) and an external antenna unit (4) are coupled via coupling means (5) (here two connector cables with/or via a battery-driven repeater unit (13)). The Figure is thus showing an example of **ASPECT A** and - in connection with the manhole cover (2) - also of **ASPECT B.** The manhole also shows in its lower surface (6) more than one ridge (20) protecting the internal antenna unit (3), the coupling means (5) and the repeater unit (13). The figure also shows a transmitter unit (10) (with a transmitter antenna (10a)) thus also being an Example of **ASPECT C.** As part of this transmitter unit (10) there is also depicted a sensor (11) which might also take the form of a further LoRaWAN Unit. Any longstanding supply of energy will be greatly enhanced if steps of energy-management will be implemented at the same time. Examples of possible steps are:
o The repeater may send LoRaWAN and receive LoRaWAN control commands.
∘ Gateways used should be able to send such LoRaWAN control commands.
∘ Data of relevance like weather forecast of historical weather data are implemented in the sytems of the invention,
o The repeater be able to change its frequency of sending and receiving data according to the needs. E.g.: if weather data predict a phase of dryness, it is not necessary to use a water level sensor very often. Only when rain is likely again, the transmission frequency is increased.
∘ Sender und Receiver are timewise synchronised.

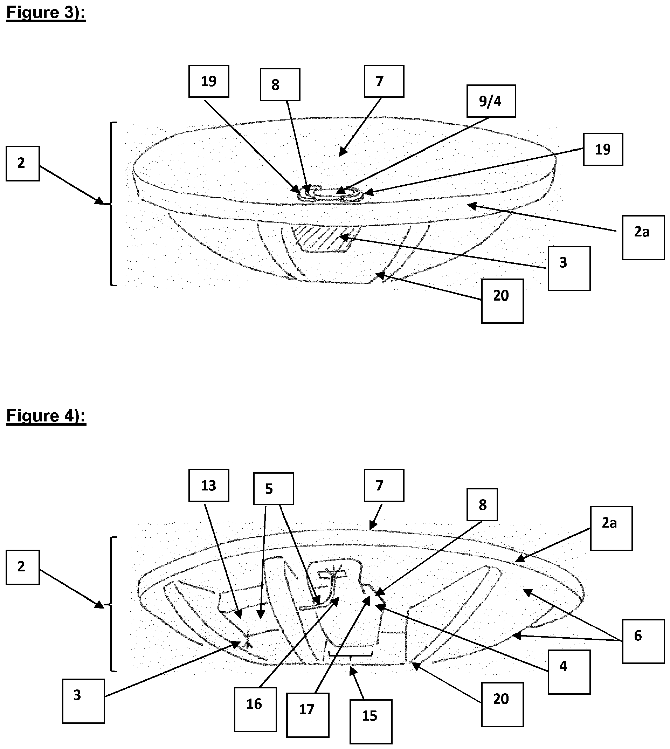

**Figure 3****)** is an example of embodiments of **ASPECTS A** and **B** of the invention.

**Figure 3****)** schematically shows - in a plan view at an angle from above - a manhole cover (2) (having a manhole cover body (2a)) with an upper surface (7) and an aperture (8) in the manhole cover. An external antenna unit (4) marked by its top (9) with more than one protecting bump (19) being placed on top of the upper surface (7) of the manhole (2) in immediate contact with the aperture (8) containing the external antenna (4) with its top (9). The external antenna unit (3) is visible, protected by more than one ridge (20) on the lower surface (6) of the manhole (2).

**Figure 4****)** is an example of embodiments of **ASPECTS A** and **B** of the invention.

**Figure 4****)** schematically shows - in a plan view at an angle from below - a manhole cover (2) (having a manhole cover body (2a)) with an upper surface (7) and an aperture (8) in the manhole cover. A holding body (15) with a first arm (16) and a second arm (17) holding the external antenna unit (4) can be seen on the lower surface (6) of the manhole cover (2). The internal antenna unit (3) is connected to the external antenna unit (4) by coupling means (5) including a repeater unit (13) which is protected by more than one ridge (20) on the lower surface (6) of the manhole (2).

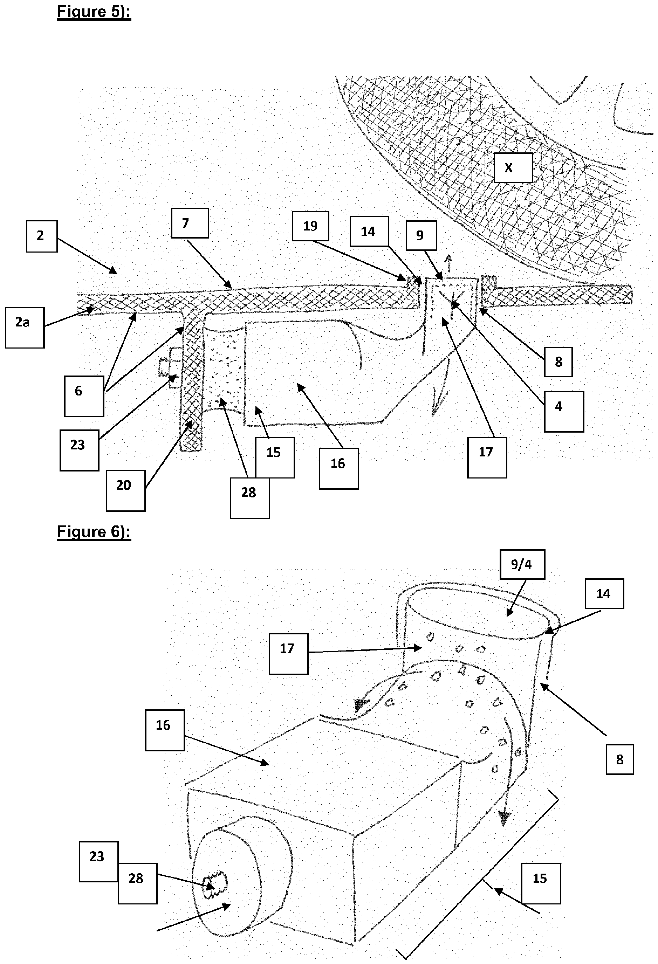

**Figure 5****)** is a partial aspect that could be embodied in any of the embodiments of **ASPECTS A** and **B** of the invention. **Figure 5****)** shows a cross section view of a manhole cover (2) according to a preferred embodiment of the invention focusing on flexibly fixing by a holding body (15) the external antenna unit (4) in relation to the upper surface (7) of the manhole cover (2) if e,.g,. a car's tire (X) would pass over it.

**Figure 6****)** shows in more detail the partial aspect shown in **Figure 5****).** This aspect represents a preferred embodiment of the invention and refers to the holding body (15). The holding body 15 is - in principle - flexibly fixing the external antenna unit (4) to the manhole cover (2), protecting the external antenna unit from damage if e.g. a car's tire (X) would pass over it. The holding body (15) is having a first arm (16) extending into a first direction and a second arm (17) extending in a second direction essentially perpendicular to the first direction. The first arm (16) is flexibly attached to the lower surface (6) of the cover element, especially the manhole cover (2). The flexible attachment takes the form as shown in **Figures 5) and 6****)** in which the holding body is fixed to the lower surface (6) of the manhole cover (2) (or a ridge being part of the lower surface (6)) by fixing means like a screw and nut while attachment means (28) are placed between the ridge (20)/manhole cover (2) and the main part of the holding body (15). These attachment means (28) enable the flexible fixing of the holding body (15) - and thus of the external antenna unit (3) - to the cover element/manhole cover In the embodiments of the invention, the attachment means are made of a polymer, preferably a artificial or natural polymer like rubber, having a high flexibility and a high resistance to chemical and physical influences (e.g. aging, pollution, high and low temperatures). It enables a circular evasion move of the second arm (17) if pressure is coming from the upper side of the cover element/manhole (e.g. by a car).

The second arm (17) comprises the external antenna unit (4) and is extending into the aperture (8). The second arm (17) comprising the external antenna unit (4) is not attached to the walls of the aperture (8). There is a gap (14) formed between (the second arm (17) comprising) the external antenna unit (4) and the wall of the aperture (8). The second arm (17) is placed in the cover element/manhole cover that it remains approximately 2 mm to 0.5 mm, preferably approximately 1 mm below the upper surface (7). The top (9) of the external antenna unit within the second arm (17) is made of polymeric material and has a thickness of approximately 4 mm to 1 mm, preferably approximately 2.5mm.

In addition, there could be - as shown in Figure 5) - protection bumps (19) formed around the aperture (8) of the coversheet/manhole cover (2). These protection bumps (19) could by formed entirely around the aperture (8). They could also take the form of a circle formed around the aperture, forming either a full circle or one or more part-circles. As also shown in Figure 3), the protection bumps (19) could form 2 part-circles around the aperture (8). The preferred embodiment above shows the advantage that by flexibly fixing the external antenna unit (4) to the manhole cover (2), the external antenna unit is protected from damage if e.g. a car's tire (X) would pass over the cover element/the manhole cover (2). This would protect both the external antenna unit (4) itself as well as its top (9). As said above the top (9) could be formed of highly resistant polymers.

Finally, this arrangement with the second arm (17) comprising the external antenna unit (4) is not attached to the walls of the aperture (8) and a gap (14) is formed between the external antenna unit (4) and the wall of the aperture (8) further protects the external antenna as debris (like sand) passes through the gap and no additional friction is delivered to the external antenna unit (4). The special geometry shown in these Figures is improving the cleaning of the gap by moving the second arm (17).

**Figure 7****)** schematically shows a cross section of a manhole (1), showing a manhole cover (2) with an internal antenna unit (3), an external antenna unit (4) being coupled via coupling means (5). It is also showing the arrangement of two loop antennas, one being part of the internal antenna unit (3) on the lower surface (6) of the manhole cover (2) and the other being the antenna (25) of the transmitter unit (10) from within the manhole (1) which are brought in close communication. It is an example of an embodiments of **ASPECTS A, B** and **C** of the invention making use of passive transmission being also usable for the transfer of mobile communications data. This passive transmission could also be standard solution for the transfer of mobile communications data in which a modem from a mobile telephone provider might be used (27) integrated into the transmitter unit (10). This modem (27) could be provided within the manhole with electricity by the local power supply voltage being supplied with data through fixed data line like a glass fiber line. Thus, by using this use of passive transmission avoids the problem an active system would face with these large amount of data having to be transferred. A self-sustaining energy supply like a battery would not be able to keep up for any longer time with the power consumption becoming necessary.

In a preferred embodiment also depicted in this **Figure 7****)** there is provided two loop antenna. the arrangement of two loop antennas, one being part of the internal antenna unit (3) on the lower surface (6) of the manhole cover (2) and the other being the antenna (25) of the transmitter unit (10) from within the manhole (1) which are brought in close communication (even potentially touching each other).Thus, this allows transmission of large volumes of data to the external antenna unit. To help this, it is an option to install massive conic means into the shaft/manhole so that the flexibly fixed (26) loop antenna (25) of the transmitter unit (10) will always end up in direct contact with the loop antenna being part of the internal antenna unit (3) on the lower surface (6) of the manhole cover (2).

**Figure 8****)** schematically shows a plan view on two antennas used in the invention. The antennas are formed on a circuit board (21), with circuit paths (22) on the circuit board and pins for the antenna plug (24) shown. The circuit boards (21) used in these antennas are approximately 15 mm by 25 mm and 45 mm by 40 mm.

In a version of the depicted antennas with a base impedance of 50 Ω, a protection against EMI was seen. The antenna was subjected in a lab to high energetic electromagnetic interference (EMI) and remained protected.

### REFERENCE SIGNS:

- 1): manhole
- 2): manhole cover
- 2a): manhole cover body
- 3): internal antenna unit
- 4): external antenna unit
- 5): coupling means
- 6): lower surface of the manhole cover (or the manhole cover body)
- 7): upper surface of the manhole cover (or the manhole cover body)
- 8): aperture in the manhole cover
- 9): top of the external antenna unit
- 10): transmitter unit
- 11): sensor
- 12): sensor unit
- 13): repeater unit
- 14): gap in the aperture
- 15): holding body
- 16): first arm of the holding body
- 17): second arm of the holding body
- 18): electrical source
- 19): protection bumps
- 20): ridge
- 21): circuit board
- 22): circuit paths on the circuit board
- 23): fixing means
- 24): pins for the antenna plug
- 25): transmitter antenna
- 26): flexible transmitter antenna fixing means
- 27): transmitter modem
- 28): attachment means

## Claims

1. A remote sensing system comprising:
an internal antenna unit (3) securable to the lower surface (6) of a cover element, especially a manhole cover (2), configured to receive a signal from a transmitting unit (10) especially placed within manhole (1);
an external antenna unit (4) for transmitting a signal to a communication device outside of the upper surface (7) of the cover element, especially the manhole cover (2);
the external antenna unit (4) configured to be placed within an aperture (8),
the aperture (8) perforating the cover element, especially the manhole cover (2), from the upper (6) to the lower surface (7) of the cover element, especially the manhole cover (2), and
the external antenna unit (4) not protruding beyond the upper surface (7) of the cover element, especially the manhole cover (2);
coupling means (5) electrically coupling the internal antenna unit (3) to the external antenna unit (4),
whereby the internal antenna unit (3) and the external antenna unit (4) are coupled by the coupling means (5) for transmitting a signal from the internal antenna unit (3) to the external antenna unit (4),
**characterized in that**
the external antenna unit (4) is flexibly attached to the lower surface (6) of the cover element, especially of the manhole cover (2), and is not attached to the walls of the aperture (8), and
the remote sensing system further comprises a holding body (15) having a first arm (16) extending into a first direction and a second arm (17) extending in a second direction essentially perpendicular to the first direction,
wherein the first arm (16) is flexibly attached to the lower surface (6) of the cover element, especially the manhole cover (2), by attachment means, and the second arm (17) comprises the external antenna unit (4) and extends into the aperture (8),
wherein the attachment means are made of a polymer having a high flexibility and the second arm (17) is not attached to the walls of the aperture (8), so that a gap (14) is provided between the second arm (17) and the wall of the aperture (8).

2. The remote sensing system of claim 1, wherein the coupling means (5) is a connector cable connecting the internal antenna unit (3) directly to the external antenna unit (4).

3. The remote sensing system of claims 1, wherein the coupling means (5) comprise a repeater unit (13).

4. The remote sensing system of any one of claims 1 to 3, wherein one or both of the external antenna unit (4) or internal antenna unit (3) is/are configured to cancel the electromagnetic interference, EMI, of the cover element, especially the manhole cover (2), preferably wherein both the external antenna unit (4) and internal antenna unit (3) are configured to cancel the electromagnetic interferente, EMI, of the cover element, especially the manhole cover (2), or preferably wherein the external antenna unit (4) is configured to cancel the electromagnetic interference, EMI, of the cover element, especially the manhole cover (2).

5. The remote sensing system of any one of claims 1 to 4, wherein one or both of the external antenna unit (4) or internal antenna unit (3) is/are formed on a circuit board (21) preferably wherein the antenna has a base impedance and transmitter impedance of 50 Ω, and/or is/are a resonant narrow band antenna and/or has/have a length of a multitude of ¼ λ, wherein λ is a wavelength; preferably wherein both the external antenna unit (4) and internal antenna unit (3) are formed on a circuit board (21), the antennas have a base impedance and transmitter impedance of 50 Ω, and/or are resonant narrow band antennas and/or have a length of a multitude of ¼ λ; or preferably wherein the external antenna unit (4) is configured to cancel the electromagnetic interference, EMI, of the cover element, especially the manhole cover (2), formed on a circuit board (21), the antenna having a base impedance and transmitter impedance of 50 Ω, and is a resonant narrow band antenna and has a length of a multitude of ¹/₄ λ.

6. The remote sensing system of claims 1 to 5, wherein the attachment means are made of an artificial or natural polymer especially rubber.

7. The remote sensing system of claims 1 to 6, wherein the antenna units (3, 4), the coupling means (5) and the optional repeater unit (13) are configured to be not powered by any electrical source.

8. The remote sensing system of claims 1 to 6, wherein the antenna units (3, 4), the coupling means (5) and the optional repeater unit (13) are configured to be powered by an electrical source (18), preferably wherein the antenna units (3,4), the coupling means (5) and/or the optional repeater unit (13) are configured to be powered by energy harvesting.

9. The remote sensing system of claims 1 to 8, wherein a lower surface (6) of the cover element, especially the manhole cover (2), comprises one or more ridges that are fixed to a manhole body (2a), and the internal antenna unit (3, 4), the coupling means (5) and the optional repeater unit (13) and/or electrical source (18) are configured such that the one or more ridges (20) protrude beyond them.

## Patentansprüche

1. Fernsensorsystem umfassend:
eine interne Antenneneinheit (3), die an der Unterseite (6) eines Abdeckelements, insbesondere eines Schachtdeckels (2), befestigbar ist und zum Empfangen eines Signals von einer insbesondere in einem Schacht (1) platzierten Sendeeinheit (10) konfiguriert ist;
wobei die externe Antenneneinheit (4) so konfiguriert ist, dass sie in einer Öffnung (8) platziert werden kann,
wobei die Öffnung (8) das Abdeckelement, insbesondere den Schachtdeckel (2), von der oberen (6) bis zur unteren Fläche (7) des Abdeckelements, insbesondere des Schachtdeckels (2), perforiert und
wobei die externe Antenneneinheit (4) nicht über die Oberseite (7) des Abdeckelements, insbesondere des Schachtdeckels (2), hinausragt;
Kopplungsmittel (5), die die interne Antenneneinheit (3) elektrisch mit der externen Antenneneinheit (4) koppeln,
wobei die interne Antenneneinheit (3) und die externe Antenneneinheit (4) durch das Kopplungsmittel (5) gekoppelt sind, um ein Signal von der internen Antenneneinheit (3) an die externe Antenneneinheit (4) zu übertragen,
**dadurch gekennzeichnet, dass** die externe Antenneneinheit (4) flexibel an der Unterseite (6) des Abdeckelements, insbesondere des Schachtdeckels (2), und nicht an den Wänden der Öffnung (8) befestigt ist, und
das Fernsensorsystem weiterhin einen Haltekörper (15) mit einem ersten Arm (16), der sich in eine erste Richtung erstreckt, und einem zweiten Arm (17), der sich in eine zweite Richtung erstreckt, die im Wesentlichen senkrecht zur ersten Richtung verläuft, umfasst,
wobei der erste Arm (16) durch Befestigungsmittel flexibel an der Unterseite (6) des Abdeckelements, insbesondere des Schachtdeckels (2), befestigt ist und der zweite Arm (17) die externe Antenneneinheit (4) umfasst und sich in die Öffnung (8) erstreckt,
wobei die Befestigungsmittel aus einem Polymer mit hoher Flexibilität bestehen und der zweite Arm (17) nicht an den Wänden der Öffnung (8) befestigt ist, so dass ein Spalt (14) zwischen dem zweiten Arm (17) und der Wand der Öffnung (8) bereitgestellt wird.

2. Fernsensorsystem nach Anspruch 1, wobei das Kopplungsmittel (5) ein Verbindungskabel ist, das die interne Antenneneinheit (3) direkt mit der externen Antenneneinheit (4) verbindet.

3. Fernsensorsystem nach Anspruch 1, wobei die Kopplungsmittel (5) eine Verstärker-(Repeater-)Einheit (13) umfassen.

4. Fernsensorsystem nach einem der Ansprüche 1 bis 3, wobei eine oder beide der externen Antenneneinheit (4) oder der internen Antenneneinheit (3) so konfiguriert ist/sind, dass sie die elektromagnetische Interferenz (EMI) des Abdeckelements, insbesondere der Schachtabdeckung (2), unterdrücken vorzugsweise wobei sowohl die externe Antenneneinheit (4) als auch die interne Antenneneinheit (3) so konfiguriert sind, dass sie die elektromagnetischen Störungen, EMI, des Abdeckelements, insbesondere der Schachtabdeckung (2), unterdrücken, oder wobei vorzugsweise die externe Antenneneinheit (4) so konfiguriert ist, dass sie die elektromagnetischen Störungen, EMI, des Abdeckelements, insbesondere des Schachtdeckels (2), unterdrückt.

5. Fernsensorsystem nach einem der Ansprüche 1 bis 4, wobei eine oder beide der externen Antenneneinheit (4) oder der internen Antenneneinheit (3) auf einer Leiterplatte (21) ausgebildet ist/sind, vorzugsweise wobei die Antenne eine Basisimpedanz und Senderimpedanz von 50 Ω aufweist, und/oder eine resonante Schmalbandantenne ist/sind und/oder eine Länge von einem Vielfachen von ¼ λ, wobei λ eine Wellenlänge ist, hat/haben; wobei vorzugsweise sowohl die externe Antenneneinheit (4) als auch die interne Antenneneinheit (3) auf einer Leiterplatte (21) ausgebildet sind, die Antennen eine Basisimpedanz und Senderimpedanz von 50 Ω haben und/oder resonante Schmalbandantennen sind und/oder eine Länge von einer Vielzahl von ¼ λ haben; oder vorzugsweise wobei die externe Antenneneinheit (4) so konfiguriert ist, dass sie die elektromagnetische Interferenz (EMI) des Abdeckelements, insbesondere des Schachtdeckels (2), unterdrückt, auf einer Leiterplatte (21) ausgebildeten ist, wobei die Antenne eine Basisimpedanz und eine Senderimpedanz von 50 Ω aufweist, und eine resonante Schmalbandantenne ist und hat eine Länge von einer Vielzahl von ¼ λ hat.

6. Fernsensorsystem nach den Ansprüchen 1 bis 5, wobei die Befestigungsmittel aus einem künstlichen oder natürlichen Polymer, insbesondere Gummi, bestehen.

7. Fernsensorsystem nach den Ansprüchen 1 bis 6, wobei die Antenneneinheiten (3, 4), die Kopplungsmittel (5) und die optionale Verstärker-(Repeater-)Einheit (13) so konfiguriert sind, dass sie nicht von einer elektrischen Quelle mit Strom versorgt werden.

8. Fernsensorsystem nach den Ansprüchen 1 bis 6, wobei die Antenneneinheiten (3, 4), die Kopplungsmittel (5) und die optionale Verstärker-(Repeater-)Einheit (13) so konfiguriert sind, dass sie von einer elektrischen Quelle (18) mit Strom versorgt werden, vorzugsweise wobei die Antenneneinheiten (3,4), die Kopplungsmittel (5) und/oder die optionale Vertärker-(Repeater-)Einheit (13) so konfiguriert sind, dass sie durch Energy Harvesting mit Energie versorgt werden.

9. Fernsensorsystem nach den Ansprüchen 1 bis 8, wobei eine untere Oberfläche (6) des Abdeckelements, insbesondere des Schachtdeckels (2), einen oder mehrere Stege aufweist, die an einem Schachtkörper (2a) und die interne Antenneneinheit (3, 4) befestigt sind, wobei die Kopplungsmittel (5) und die optionale Verstärker-(Repeater)-Einheit (13) und/oder Stromquelle (18) so ausgebildet sind, dass der eine oder die mehreren Stege (20) darüber hinausragen.

## Revendications

1. Système de télédétection comprenant :
une unité d'antenne intérieure (3) pouvant être fixée contre la surface inférieure (6) d'un élément de couvercle, en particulier une plaque d'égout (2), configurée pour recevoir un signal depuis une unité de transmission (10) en particulier placée à l'intérieur du regard (1) ;
une unité d'antenne extérieure (4) pour la transmission d'un signal à un dispositif de communication à l'extérieur de la surface supérieure (7) de l'élément de couvercle, en particulier la plaque d'égout (2) ;
l'unité d'antenne extérieure (4) configurée pour être placée à l'intérieur d'une ouverture (8),
l'ouverture (8) perforant l'élément de couvercle, en particulier la plaque d'égout (2), depuis la surface supérieure (6) vers la surface inférieure (7) de l'élément de couvercle, en particulier la plaque d'égout (2), et
l'unité d'antenne extérieure (4) ne faisant pas saillie au-delà de la surface supérieure (7) de l'élément de couvercle, en particulier la plaque d'égout (2) ;
des moyens d'accouplement (5) couplant électriquement l'unité d'antenne intérieure (3) à l'unité d'antenne extérieure (4),
moyennant quoi l'unité d'antenne intérieure (3) et l'unité d'antenne extérieure (4) sont couplées par les moyens d'accouplement (5) pour la transmission d'un signal depuis l'unité d'antenne intérieure (3) vers l'unité d'antenne intérieure (4),
**caractérisé en ce que**
l'unité d'antenne extérieure (4) est fixée de façon flexible à la surface inférieure (6) de l'élément de couvercle, en particulier de la plaque d'égout (2), et n'est pas fixée aux parois de l'ouverture (8), et
le système de télédétection comprend en outre un corps de maintien (15) présentant un premier bras (16) s'étendant dans une première direction et un second bras (17) s'étendant dans une seconde direction essentiellement perpendiculaire à la première direction,
dans lequel le premier bras (16) est fixé de façon flexible à la surface inférieure (6) de l'élément de couvercle, en particulier la plaque d'égout (2), par des moyens de fixation, et le second bras (17) comprend l'unité d'antenne extérieure (4) et s'étend jusque dans l'ouverture (8),
dans lequel les moyens de fixation sont réalisés dans un polymère présentant une flexibilité élevée et le second bras (17) n'est pas fixé aux parois de l'ouverture (8), de sorte qu'un écart (14) soit aménagé entre le second bras (17) et la paroi de l'ouverture (8).

2. Système de télédétection selon la revendication 1, dans lequel le moyen d'accouplement (5) est un câble de raccordement raccordant l'unité d'antenne intérieure (3) directement à l'unité d'antenne extérieure (4).

3. Système de télédétection selon la revendication 1, dans lequel les moyens d'accouplement (5) comprennent une unité de répéteur (13).

4. Système de télédétection selon l'une quelconque des revendications 1 à 3, dans lequel l'une ou les deux parmi l'unité d'antenne extérieure (4) ou l'unité d'antenne intérieure (3) est/sont configurée(s) pour annuler l'interférence électromagnétique, EMI, de l'élément de couvercle, en particulier la plaque d'égout (2), de préférence dans lequel tant l'unité d'antenne extérieure (4) que l'unité d'antenne intérieure (3) sont configurées pour annuler l'interférence électromagnétique, EMI, de l'élément de couvercle, en particulier la plaque d'égout (2), ou de préférence dans lequel l'unité d'antenne extérieure (4) est configurée pour annuler l'interférence électromagnétique, EMI, de l'élément de couvercle, en particulier la plaque d'égout (2).

5. Système de télédétection selon l'une quelconque des revendications 1 à 4, dans lequel l'une ou les deux parmi l'unité d'antenne extérieure (4) ou l'unité d'antenne intérieure (3) est/sont formée(s) sur une carte de circuits imprimés (21) de préférence dans lequel l'antenne présente une impédance de base et une impédance de transmission de 50 Ω, et/ou est/sont une antenne résonante à bande étroite et/ou présente(nt) une longueur d'une multitude de ¼ λ, dans lequel λ est une longueur d'onde ; de préférence dans lequel tant l'unité d'antenne extérieure (4) que l'unité d'antenne intérieure (3) sont formées sur une carte de circuits imprimés (21), les antennes présentent une impédance de base et une impédance de transmission de 50 Ω, et/ou sont des antennes résonantes à bande étroite et/ou présentent une longueur d'une multitude de ¼ λ ; ou de préférence dans lequel l'unité d'antenne extérieure (4) est configurée pour annuler l'interférence électromagnétique, EMI, de l'élément de couvercle, en particulier la plaque d'égout (2), formée sur une carte de circuits imprimés (21), l'antenne présentant une impédance de base et une impédance de transmission de 50 Ω, et est une antenne résonante à bande étroite et présente une longueur d'une multitude de ¹/₄ λ.

6. Système de télédétection selon les revendications 1 à 5, dans lequel les moyens de fixation sont réalisés dans un polymère artificiel ou naturel, en particulier du caoutchouc.

7. Système de télédétection selon les revendications 1 à 6, dans lequel les unités d'antenne (3, 4), les moyens d'accouplement (5) et l'unité de répéteur (13) optionnelle sont configurés pour ne pas être alimentés par une source électrique quelle qu'elle soit.

8. Système de télédétection selon les revendications 1 à 6, dans lequel les unités d'antenne (3, 4), les moyens d'accouplement (5) et l'unité de répéteur (13) optionnelle sont configurés pour être alimentés par une source électrique (18), de préférence dans lequel les unités d'antenne (3, 4), les moyens d'accouplement (5) et/ou l'unité de répéteur (13) optionnelle sont configurés pour être alimentés par récupération d'énergie.

9. Système de télédétection selon les revendications 1 à 8, dans lequel une surface inférieure (6) de l'élément de couvercle, en particulier la plaque d'égout (2), comprend une ou plusieurs arêtes qui sont fixées contre un corps de regard (2a) et l'unité d'antenne intérieure (3, 4), les moyens d'accouplement (5) et l'unité de répéteur (13) optionnelle et/ou source électrique (18) sont configurés de sorte que les une ou plusieurs arêtes (20) fassent saillie au-delà de ceux-ci.
